# EUROPEAN PATENT SPECIFICATION

(11) **EP 1 369 173 B1**
(45) Date of publication and mention of the grant of the patent: **09.07.2008**
(21) Application number: 03253406.7
(22) Date of filing: 30.05.2003
(51) Int. Cl.: B01J 20/10, B01J 20/20, B01J 20/28

(54) **Moisture absorbent unit and semi-sealed container**
Feuchtigkeitsabsorptionsmittel und halbdichter Behälter
Absorbant d'humidité et conteneur semi-hermétique

(30) Priority: 30.05.2002 JP 2002157880
(43) Date of publication of application: 10.12.2003
(73) Proprietor: JAPAN GORE-TEX, INC., Mitsu-gun, Okoyama, Okoyama-ken 709-2123 (JP)
(72) Inventor: Sasaki,Yutaka, c/o Japan Gore-tex inc., Mitsu-gun, Okoyama-ken 709-2123 (JP); Ueki, Takuya, c/o Japan Gore-tex inc., Mitsu-gun, Okoyama-ken 709-2123 (JP)
(74) Representative: Shanks, Andrew

(56) References cited:
- EP-A- 0 831 059
- WO-A-96/06669
- WO-A-97/37756
- WO-A-98/41989
- US-B1- 6 248 691

## Description

### FIELD OF THE INVENTION

The present invention relates to a moisture- adsorbent material unit used inside a semi-sealed container of a hard disk drive device or other device for which condensation prevention is required.

### DETAILED DESCRIPTION OF THE INVENTION

The storage capacity of hard disk drive devices (sometimes referred to hereinbelow as "HDD") has increased dramatically in recent years. Based on storing a vast amount of information, the requirements of such an HDD are shifting from the conventional high capacity, high processing speed, and other processing capability enhancements towards performance enhancements that include environmental tolerance/impact resistance and other reliability and durability enhancements.

Higher reliability and durability are sought particularly for a miniature HDD used in a notebook-type personal computer, mobile information terminal, or other so-called mobile computer, due to the wide range of variation in their operating environment compared to desktop-type personal computers.

Measures against condensation that can form inside an HDD in conjunction with variations in relative humidity can be cited as an enhancement to HDD durability. For example, when a notebook-type personal computer is carried outdoors in the summer, the HDD is exposed to a high-temperature environment. When the notebook-type personal computer is subsequently brought into an air-conditioned room, condensation can form inside the HDD as a result of the sharp temperature drop inside the HDD.

Due to such condensation, the HDD can sometimes fail to operate properly, and in some cases, information recorded in the HDD can be lost.

Such environmental tolerance of miniature-type HDD has always received attention, and is viewed as even more important now, with the recent widespread use of mobile computers. Car navigation systems with an onboard HDD have recently arrived on the market at full scale, which is also a cause for increased attention to HDD environmental tolerance.

Also, the higher storage capacity of today's HDD brings with it more sensitivity to dust particles, organic gas, acidic gas, moisture vapor, and the like, and airtightness is being improved to restrict the entry thereof. The airtightness of most HDD currently on the market is enhanced using gaskets and metallic foil tape made from materials having low gas transmissivity and low moisture transmissivity. Many HDD are also equipped with long, narrow ducts as breathing holes used for pressure adjustment, in order to maintain equilibrium between the HDD internal pressure and the pressure of the external environment while reducing inflow due to diffusion of the abovementioned gases and moisture vapor.

This kind of highly-airtight HDD can effectively restrict the entry of gases and moisture vapor from the outside when used in an environment with low temperature fluctuations. But on the other hand, the range of relative humidity fluctuation inside the HDD widens because of the high degree of airtightness, and condensation must be attended to when the device is used in an environment that has large temperature fluctuations.

Therefore, with respect to suppressing HDD internal condensation, raising the airtightness is required to restrict inflow of moisture, and lowering the airtightness is required for suppressing condensation induced by fluctuations in relative humidity that accompany temperature varies inside the HDD, but these approaches are mutually incompatible. Also, because a miniature-type HDD such as is used in a mobile computer is used in an environment with extremes in temperature and humidity, as described above, the current situation is that sufficient condensation reduction cannot be achieved simply by increasing the airtightness.

Under these circumstances, various techniques have been proposed in the past for the purposes of controlling humidity and preventing condensation inside an HDD.

For example, condensation preventing means that utilize moisture-adsorbent film are proposed in Japanese Patent Application Laid-open No. H1-199389. The moisture-adsorbent film used in this technique is formed from polyvinyl alcohol, sodium polyacrylate, polyacrylamide, and other moisture-adsorbent polymers. Because these moisture-adsorbent polymers can be processed and used in a film shape, tube shape, or other form, they can be handled more easily than an inorganic moisture-absorbing agent generally in powder/granulate form.

However, the volume of these moisture-adsorbent films varies significantly during adsorption, and because the film must not touch other components inside the HDD when the volume thereof is expanded, the usable quantity of moisture-adsorbent material is determined based on the film volume after adsorption. Also, HDD are recently becoming more miniaturized, and because there is almost no unused space therein, the usable quantity of moisture-adsorbent material is limited to an extremely small quantity in the technique of Japanese Patent Application Laid-open No. H1 -199389 that uses moisture-adsorbent film, and adequate moisture-absorbing characteristics are difficult to maintain.

A method is also disclosed in Japanese Patent Application Laid-open No. H8-45263 whereby a metallic foil with high thermal conductivity is mounted inside the container. This technique for preventing condensation on other components takes advantage of the phenomenon whereby the metal foil cools faster than other internal components to preferentially induce condensation on the surface of the metallic foil during sudden drops in the temperature outside the container.

However, while this technique has condensation-preventing effects on other components when sharp temperature changes occur outside the container, the metallic foil does not function adequately as a moisture-absorbing body when temperature changes are moderate, and condensation on other components cannot be effectively prevented. Also, with condensation having formed on the surface of the metallic foil, because the temperature of the metallic foil rises faster than the temperature of other components during sudden increases in external temperature, the moisture on the surface of the metallic film is vaporized all at once, and it is also possible for condensation to form on the surfaces of other components whose temperatures are lower than that of the metallic foil.

A desiccant pack utilizing silica gel is disclosed in Japanese Utility Model Application Laid-open No. S61-115128.

An HDD having hydrous silica gel with moisture absorbed therein in advance as a means for adjusting humidity is also disclosed in Japanese Patent Application Laid-open No. H4-181588. Recognizing the moisture-shedding characteristics of silica gel, this technique attempts to prevent excessive drying that becomes a concern when dried silica gel is used. It is furthermore disclosed in Japanese Patent Application Laid-open No. H4-181588 that type A silica gel, which has excellent moisture absorbance/shedding responsivity in a low humidity range, and type B silica gel, which has excellent moisture absorbance/shedding responsivity in a high humidity range, can be used separately or jointly to suit the particular purpose.

According to the abovementioned Japanese Utility Model Application Laid-open No. S61-115128, Japanese Patent Application Laid-open No. H4-181588, and the like, the use of silica gel inside an HDD is publicly known, but the silica gel used is generally type A or type B as stipulated by the JIS, as in Japanese Patent Application Laid-open No. H4-181588. There are actually HDD currently on the market in which type A or type B silica gel is used as a moisture-adsorbent material.

However, depending on the HDD operating environment, there are cases in which sufficient condensation prevention effects cannot be obtained, even when type A silica gel and type B silica gel are used separately or jointly, as in Japanese Patent Application Laid-open No. H4-181588. For example, when an HDD with an internal relative humidity of 85% or greater that has been left unattended for a long period of time in a high-temperature high-humidity environment is brought into a low temperature environment, type A and type B silica gels are sometimes unable to inhibit the sharp increase in humidity inside the HDD that accompanies the temperature change, and cannot prevent condensation from forming.

This is a phenomenon that results from the moisture-absorbing characteristics of the abovementioned silica gel. The quantity of moisture absorbed by silica gel or another moisture-adsorbent material is generally small in an environment with low relative humidity, and large in an environment with high relative humidity. Type A silica gel has good moisture adsorption in an environment with low relative humidity (50% or lower) compared to type B silica gel, for example, but even when the relative humidity exceeds 50%, the moisture adsorption therein does not increase much, and the absolute value of moisture adsorption is still low. The moisture adsorption in type B silica gel is also extremely small in a low-humidity environment with a relative humidity of 50% or lower, but the moisture adsorption increases sharply as the relative humidity exceeds 50%, up to approximately 70%, and the value thereof significantly exceeds that of type A silica gel. In an environment in which the relative humidity exceeds 70%, however, the increase in moisture adsorption becomes extremely small. Thus type A silica gel and type B silica gel are unable to adequately inhibit the increase in humidity that accompanies situations in which the temperature falls sharply while the relative humidity of the environment is 85% or greater.

Consequently, a large quantity of moisture-adsorbent material is required to adequately inhibit condensation by conventional condensation preventing methods that use type A silica gel, type B silica gel, and other moisture-adsorbent material when the relative humidity rises further in a high-humidity atmosphere. But at the same time, because the applicable quantity of moisture-adsorbent material is severely limited in the abovementioned miniature HDD used in a mobile computer, for example, condensation prevention in the abovementioned circumstances is sometimes insufficient.

WO 98/41989 describes an adsorbent filter comprising compression molded particulate adsorbent construction. The compression molded particulate adsorbent construction contains a particulate adsorbent and a sufficient amount of binder to retain the particulate adsorbent in a non-free flowing form.

WO 96/06669 describes a compact sorbent filter for selectively sorbing contaminates and a method of removing contamination from an enclosure with a filter.

WO 97/37756 describes an improved, clean, stiff, washable compact adsorbent filter assembly for selectively adsorbing contaminates from an enclosure.

The present invention was developed in view of the abovementioned situation, and an object thereof is to provide a moisture-adsorbent unit capable of sufficiently restricting condensation inside a miniaturizable semi-sealed container in a state of comparatively high internal humidity, even when the semi-sealed container undergoes a sharp temperature drop from being placed in a low-temperature environment, and to provide a semi-sealed container having the moisture-adsorbent unit.

### SUMMARY OF THE INVENTION

The present invention relates to a magnetic storage disk drive as defined in the claims.

The moisture-adsorbent unit of the present invention with which the abovementioned object has been attained is described in (1) through (4) below.
(1) A moisture-adsorbent unit used inside a semi-sealed container, wherein the moisture-adsorbent unit has a porous moisture-adsorbent material for which the difference in moisture adsorption, obtained by subtracting the moisture adsorption at a temperature of 25°C and relative humidity of 85% from the moisture adsorption at a temperature of 25°C and relative humidity of 95%, is 15% by mass or more of the moisture-adsorbent material before adsorption.
(2) A moisture-adsorbent unit used inside a semi-sealed container, wherein the moisture-adsorbent unit has a moisture-adsorbent material mixture comprising a porous moisture-adsorbent material for which the difference in moisture adsorption, obtained by subtracting the moisture adsorption at a temperature of 25°C and relative humidity of 85% from the moisture adsorption at a temperature of 25°C and relative humidity of 95%, is 15% by mass or more of the moisture-adsorbent material before adsorption, and a moisture-adsorbent material and/or gas-adsorbent material other than the porous moisture-adsorbent material.
(3) A moisture-adsorbent unit used inside a semi-sealed container, wherein the moisture-adsorbent unit has a porous moisture-adsorbent material for which the cumulative pore volume of pores with radii of 3 to 10 nm is at least 0.2 mL/g.
(4) A moisture-adsorbent unit used inside a semi-sealed container, wherein the moisture-adsorbent unit has a moisture-adsorbent material mixture comprising a porous moisture-adsorbent material for which the cumulative pore volume of pores with radii of 3 to 10 nm is at least 0.2 mL/g, and a moisture-adsorbent material and/or gas-adsorbent material other than the porous moisture-adsorbent material.

Also, it is preferable for the moisture-adsorbent unit according to (3) and (4) above that the difference in moisture adsorption, obtained by subtracting the moisture adsorption at a temperature of 25°C and relative humidity of 85% from the moisture adsorption at a temperature of 25°C and relative humidity of 95%, be 15% by mass or more of the moisture-adsorbent material before adsorption.

The mass of the porous moisture-adsorbent material before adsorption can be found, for example, by measuring the porous moisture-adsorbent material after drying for 2 hours at 120°C.

Other than a sealed-type container in which the container interior is completely separated from the outside, the abovementioned semi-sealed container includes, for example, a container having one or more air vents running from the container interior to the outside for the purpose of internal pressure adjustment.

At least one type selected from among a group comprising silica gel, alumina gel, silica/alumina gel (a gel containing SiO₂ and Al₂O₃, in which the sum of the compositional ratios of SiO₂ and Al₂O₃ is 50% or more), and activated carbon is recommended as the abovementioned porous moisture-adsorbent material.

It is also recommended that the porous moisture-adsorbent material or moisture-adsorbent material mixture be in a sheet form or pellet form further comprising a binder. Polytetrafluoroethylene and moisture-adsorbent polymer are preferably used as the binder.

It is preferable for the abovementioned moisture-adsorbent unit that at least a portion of the abovementioned porous moisture-adsorbent material or abovementioned moisture-adsorbent material mixture be contained in a receptacle formed from an air-permeable sheet. Porous polytetrafluoroethylene film is suitable as the air-permeable sheet. A preferred embodiment is one in which the abovementioned receptacle is opposite from the air vents of the semi-sealed container, and has one or more openings therein.

The above-mentioned moisture-adsorbent unit is suitable for use inside a magnetic storage disk device, such as a hard disk drive device, for example.

A semi-sealed container having the moisture-adsorbent unit of the present invention in the interior thereof is also encompassed by the present invention.

### BRIEF DESCRIPTION OF THE DRAWINGS

Figure 1 A cross-sectional view depicting an example of a moisture-adsorbent unit in which the moisture-adsorbent material is contained in a receptacle.
Figure 2 A cross-sectional view depicting an example of a moisture-adsorbent unit that uses a moisture-adsorbent material sheet and adhesive agent.
Figure 3 A cross-sectional view depicting an example of a moisture-adsorbent unit that uses a moisture-adsorbent material sheet, breathable sheet, and adhesive agent.
Figure 4 A cross-sectional view depicting an example of a moisture-adsorbent unit that is combined with a semi-sealed container.
Figure 5 A cross-sectional view depicting an example of a moisture-adsorbent unit having an opening.
Figure 6 A cross-sectional view depicting another example of a moisture-adsorbent unit having an opening.
Figure 7 An example depicting application of the moisture-adsorbent unit of the present invention to a hard disk drive device.
Figure 8 A cross-sectional view depicting the semi-sealed container used in evaluation of the moisture absorbing characteristics of moisture-adsorbent units No. 1 through No. 3.
Figure 9 A graph showing the moisture absorbing characteristics of moisture-adsorbent units No. 1 through No. 3.
Figure 10 A cross-sectional view of the moisture-adsorbent unit manufactured in Experiment 2.
Figure 11 A graph showing the moisture absorbing characteristics of moisture-adsorbent units No. 4 and No. 5.

### DETAILED DESCRIPTION OF THE INVENTION

As a result of concentrated investigation aimed at sufficiently restricting condensation that accompanies a sharp temperature drop in a semi-sealed container whose interior has a relative humidity of 85% or greater, for example, the inventors discovered that with a moisture-adsorbent unit that uses a moisture-adsorbent material having specific characteristics or form, the aforementioned condensation can be adequately restricted even in containers that are smaller than conventional containers, and thus developed the present invention.

The moisture-adsorbent unit (1) of the present invention has a porous moisture-adsorbent material for which the difference in moisture adsorption, obtained by subtracting the moisture adsorption at a temperature of 25°C and relative humidity of 85% from the moisture adsorption at a temperature of 25°C and relative humidity of 95% (sometimes referred to hereinbelow as simply "difference in moisture adsorption"), is 15% by mass or more of the moisture-adsorbent material before adsorption. With a moisture-adsorbent unit having a porous moisture-adsorbent material with characteristics such as these, condensation that accompanies a sharp temperature drop in a semi-sealed container whose interior has a relative humidity of 85% or greater can be sufficiently restricted. Specifically, cases arise in which the abovementioned condensation cannot be sufficiently restricted when the abovementioned difference in moisture adsorption falls below 15% by mass of the moisture-adsorbent material before adsorption in the porous moisture-adsorbent material. Thus, application to the abovementioned miniature-type HDD becomes difficult because the moisture-adsorbent unit requires a greater quantity of moisture-adsorbent material. The abovementioned difference in moisture adsorption should be as large as possible. It is recommended, for example, that the difference be 20% by mass or more, and preferably 30% by mass or more, of the moisture-adsorbent material before adsorption.

A porous moisture-adsorbent material for which the cumulative pore volume of pores with radii of 3 to 10 nm (hereafter referred to as "V₃₋₁₀") is at least 0.2 mL/g is included, for example, as the abovementioned porous moisture-adsorbent material having a specific difference in moisture adsorption. Thus the moisture-adsorbent unit having this porous moisture-adsorbent material is the "moisture-adsorbent unit (3)," designated as the moisture-adsorbent unit of the present invention. Also, the "pore radii" and "cumulative pore volume" referred to in the present invention are values found by means of a publicly known nitrogen adsorption method (a method by which the relationship between the quantity of nitrogen adsorbed in the test sample and the corresponding pressure are measured to find an isothermal adsorption curve, and the pore radii and cumulative pore volume are calculated using the Kelvin equation, with the measurement performed using an "ASAP 2010" gas adsorption measurement device, manufactured by Shimadzu Corp.) for silica gel, alumina gel, and silica/alumina gel, and are values found by means of a publicly known moisture vapor adsorption method (a method identical to the method described in Japanese Patent Publication No. 3122205, whereby the relationship between the quantity of water adsorbed in the test sample and the corresponding moisture vapor pressure are measured to find an isothermal adsorption curve, and the pore radii and cumulative pore volume are calculated using the Kelvin equation) for porous moisture-adsorbent materials other than silica gel, alumina gel, and silica/alumina gel.

Because a porous moisture-adsorbent material with a high moisture adsorption at a relative humidity of 85% or greater adsorbs moisture by the action of capillary condensation, the moisture absorbing characteristics of the moisture-adsorbent material are mainly determined by the pore radii and cumulative pore volume. The following occurs if the pore radii fall below 3 nm: because the absorbing strength is considerable in an environment with relative humidity below 85%, there is almost no more adsorption after adsorption equilibrium is reached at 85% relative humidity, even if the relative humidity increases. Also, the moisture adsorption is low in an environment with relative humidity ranging from 95% to 85% when the pore radii exceed 10 nm. Because of this, a moisture-adsorbent material for which V₃₋₁₀ is 0.2 mL/g may, for example, be cited as an example of a moisture-adsorbent material in which the abovementioned difference in moisture adsorption is 15% by mass or more of the moisture-adsorbent material before adsorption. Because the abovementioned difference in moisture adsorption may fall below 15% by mass of the moisture-adsorbent material before adsorption if V₃₋₁₀ falls below 0.2 mL/g, the abovementioned condensation cannot always be sufficiently restricted and the previously described drawbacks are encountered in a moisture-adsorbent unit in which this material is used. A V₃₋₁₀ of 0.3 mL/g or greater is more preferable.

No particular limitations are imposed on the material used for the porous moisture-adsorbent material pertaining to the moisture-adsorbent unit (1) or for the porous moisture-adsorbent material pertaining to the moisture-adsorbent unit (3). Silica gel, alumina gel, silica/alumina gel, activated carbon, ionexchange resin, styrenic polymers, acrylic ester polymers, and the like are included as examples thereof. Silica gel, alumina gel, silica/alumina gel, and activated carbon are preferable among these because they yield a product with a large V₃₋₁₀ with relative ease. These porous moisture-adsorbent materials may be used one type at a time, or in mixtures of two or more types thereof.

The moisture-adsorbent unit of the present invention also includes embodiments that have moisture-adsorbent mixtures in which moisture-adsorbent materials and/or gas-adsorbent materials other than the porous moisture-adsorbent materials present in the moisture-adsorbent unit (1) or moisture-adsorbent unit (3) are admixed into the abovementioned moisture-adsorbent material [moisture-adsorbent unit (2) and moisture-adsorbent unit (4)].

The aforementioned moisture-adsorbent materials other than the abovementioned porous moisture-adsorbent material (sometimes referred to hereinbelow as "other moisture-adsorbent materials") have moisture absorbing characteristics that differ from those of the porous moisture-adsorbent material. The other moisture-adsorbent materials are not particularly limited, and may include silica gel, alumina gel, activated carbon, zeolite, moisture-adsorbent polymer (for example, polyvinyl alcohol, polyacrylamide, and the like), metal salts (for example, magnesium sulfate and other sulfates, calcium carbonate and other carbonates, calcium chloride and other metal chlorides, calcium oxide and other metal oxides, magnesium silicate and other silicates, and the like), and other compounds for which the pore radii and cumulative pore volume differ from the abovementioned porous moisture-adsorbent material.

For example, when type A silica gel is used as another moisture-adsorbent material, a moisture-adsorbent unit can be obtained with good moisture absorbing characteristics in ranges of both 0 to 50% and 85 to 100% relative humidity inside a semi-sealed container. When type B silica gel is used as another moisture-adsorbent material, it is also possible to obtain a moisture-adsorbent unit with excellent moisture absorbing characteristics in a wide range of 50 to 100% relative humidity inside a semi-sealed container.

When a gas-adsorbent material is used in the moisture-adsorbent material mixture, it is also possible to eliminate organic or inorganic contaminating gas from inside the semi-sealed container. The gas-adsorbent material is not particularly limited, and may include, for example, activated carbon, zeolite, silica gel, metal salts (potassium carbonate and other carbonates, iron sulfate or other sulfates, calcium oxide or other metal oxides, and the like), activated metals, polymeric amines, polymeric acids, and the like. Activated carbon can be used preferably among these, because it has an extremely large surface area, can adsorb a variety of organic and inorganic contaminating gases, and is excellent in moisture absorbance. Other than this, when adsorption of inorganic contaminating gas is particularly required, it is also preferable to select a metal salt, activated metal, polymeric amine, or polymeric acid that can be neutralized by reaction with the inorganic contaminating gas. When metal salts are used, it is possible to effectively adsorb inorganic contaminating gas even using a small quantity thereof, because the surfaces of porous moisture-adsorbent material, other moisture-adsorbent material, and gas-adsorbent material other than metal salts are impregnated therewith.

The mixture ratio maintained when a moisture-adsorbent material mixture is used is not particularly limited, and may be determined so as to satisfy the moisture adsorption/adsorption characteristics required by the moisture-adsorbent unit, but at least from the standpoint of adequately preserving the characteristic whereby condensation that accompanies a sharp temperature drop can be minimized in a semi-sealed container with a relative internal humidity of 85% or more, it is recommended that there be 10% by mass or more, and preferably 30% by mass or more, of the abovementioned porous moisture-adsorbent material per 100% by mass of the moisture-adsorbent material mixture. Also, when, for example, type A silica gel or type B silica gel is used as another moisture-adsorbent material, it is preferable that there be 10% by mass or more of type A silica gel or type B silica gel per 100% by mass of moisture-adsorbent material mixture in order to effectively maximize the effects of these gels.

The form of the porous moisture-adsorbent material or moisture-adsorbent material mixture (sometimes both are combined and referred to hereinbelow as "moisture-adsorbent material") is not particularly limited, and a product suitable for use in a moisture-adsorbent unit may be selected as needed from among various forms, including a powder, grain, sheet, pellet (for example, a tablet or the like), or the like. Among these, a product in the form of a sheet (moisture-adsorbent material sheet) or pellet (moisture-adsorbent material pellet) is preferable because it can be easily handled.

Because the general form thereof is a powder or grain, the porous moisture-adsorbent material and the other moisture-adsorbent material or gas-adsorbent material comprising the moisture-adsorbent material mixture may be made into a sheet form or pellet form using a binder. Polytetrafluoroethylene (PTFE), polyethylene, polypropylene, polyester resin, polyamide resin, polyvinyl alcohol, polyacrylamide, or the like may, for example, be used as a binder.

Among these even, it is preferable to use a binder that has a minimal adverse effect on the native moisture-absorbing/adsorbing characteristics of the porous moisture-adsorbent material, other moisture-adsorbent material, and gas-adsorbent material; specifically, the use of PTFE or moisture-adsorbent polymer (polyvinyl alcohol, polyacrylamide, or the like) is recommended. When PTFE is used for the binder, a sheet or pellet form can be made without adversely affecting the characteristics of the porous moisture-adsorbent material and the like, because PTFE does not penetrate the pores of the porous moisture-adsorbent material and the like, and the pores thereof are unlikely to be covered. Also, when moisture-adsorbent polymer is used for the binder, the moisture-absorbing characteristics of the moisture-adsorbent polymer can be incorporated therein, and even if the pores of the porous moisture-adsorbent material are covered, the moisture-absorbing characteristics thereof are unlikely to be adversely affected, because of the moisture transmissivity of the binder itself.

The form of the moisture-adsorbent unit is not particularly limited, but when, for example, applied to a semi-sealed container in which the unit must be secured in the interior thereof, an easily securable form is preferred.

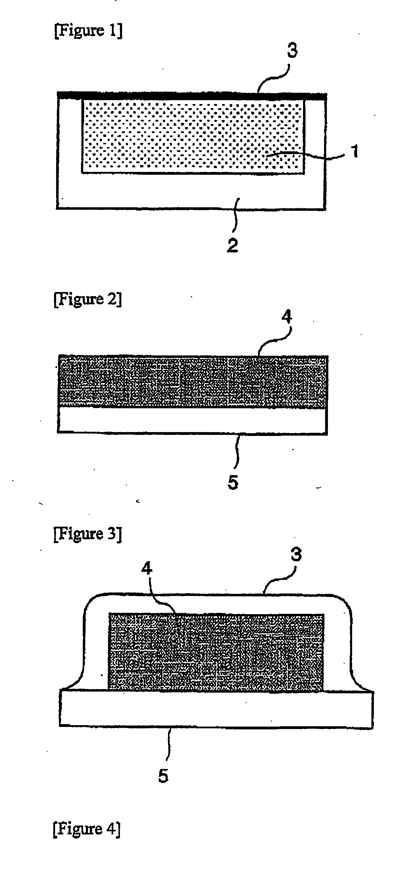

An example is a moisture-adsorbent unit in which moisture-adsorbent material is contained in a container, pouch, or other receptacle having ventilation elements in at least a portion thereof. The form of the receptacle is not particularly limited, and may be selected according to the type of semi-sealed container used. The material of the receptacle is also not particularly limited, but a product in which a breathable material for forming ventilation elements is applied to part of a resinous container or metallic container is preferred if, for example, ease of securing inside the semi-sealed container is emphasized. Porous resin film, nonwoven cloth, woven cloth, netting, and other breathable sheeting and the like are included, for example, as breathable materials, but the pore size thereof must be such that the contained moisture-adsorbent material does not pass through/drop out. Particularly when used inside an electronic device such as an HDD, it is preferable to use a product capable of reducing fine dust generated from the moisture-adsorbent material and particles emanating from the breathable material itself inside the device, and porous PTFE is specifically recommended. An example of such a moisture-adsorbent unit is depicted in Fig. 1. Even if the sheeted or pelleted moisture-adsorbent material is originally a pulverulent or granular moisture-adsorbent material, scattering inside the semi-sealed container can still be prevented with this embodiment of a moisture-adsorbent unit.

The moisture-adsorbent material can also be secured to a sheeted or pelleted (particularly tabletted) moisture-adsorbent material in the interior of a semi-sealed container using an adhesive agent or bonding agent (hereafter referred to as "adhesive/bonding agent"). Acrylics, silicones, butyl rubbers, styrenes, and other adhesive agents, as well as epoxies, amides, and other hot melting or other bonding agents may be used as such adhesive/bonding agents. An embodiment of the moisture-adsorbent unit in which a sheeted adhesive agent is affixed to part of the sheeted or pelleted moisture-adsorbent material is preferred. An example of such a moisture-adsorbent unit is depicted in Fig. 2. In this case, it is preferable to use a moisture-adsorbent material whose shape does not change in the operating environment (the environment inside the semi-sealed container).

A moisture-adsorbent material that can change shape according to the operating environment and partially or completely drop out is preferably contained in a receptacle such as the one depicted in Fig. 1, or the surface of the moisture-adsorbent material other than the adhesive/bonding agent-fixed surface is preferably covered with breathable material. The same base material as the one exemplified above for the receptacle can be cited as an example of the breathable material. An example of the corresponding moisture-adsorbent unit is depicted in Fig. 3.

The moisture-adsorbent unit and the semi-sealed container may also be combined. An example is a product in which an indentation or holder capable of supporting the moisture-adsorbent material is provided to part of the inner wall of the semi-sealed container, and the moisture-adsorbent material is secured. When part or all of the moisture-adsorbent material can drop out, covering with the abovementioned breathable material is preferable. An example of this moisture-adsorbent unit is depicted in Fig. 4.

When, for example, the semi-sealed container has an air vent leading from the interior of the container to the outside, a filter used for collecting contaminants is often placed in the air vent to prevent the inflow of outside contaminants into the container interior, and this filter feature may also be added to the moisture-adsorbent unit. Such contaminants include dust, water (water vapor), oil, organic gases, inorganic gases, and the like, and the structure and material for the moisture-adsorbent unit filter is determined according to the type of contaminant whose entry into the semi-sealed container interior is to be restricted. The abovementioned breathable material (breathable sheet) for forming part of the receptacle should usually act as the abovementioned filter.

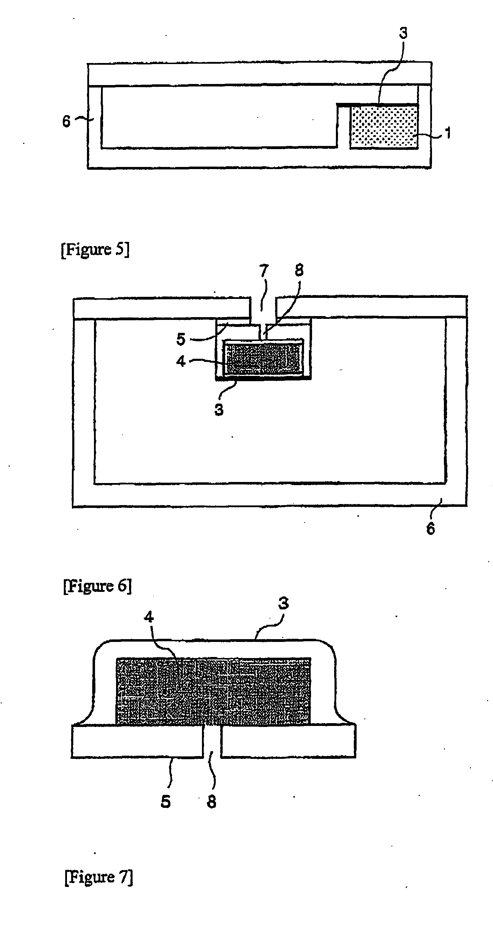

Fig. 5 depicts an example in which the moisture-adsorbent unit of the present invention is adapted to a semi-sealed container having an air vent on the lid surface thereof. An opening 8 is provided to part of the receptacle in the moisture-adsorbent unit in Fig. 5, and a breathable sheet 3 is provided to the inner surface of the semi-sealed container of the receptacle.

In the case of a pulverulent moisture-adsorbent material, the opening of the receptacle may be covered with the breathable sheet to prevent scattering of the moisture-adsorbent material powder, and if the cross-sectional shape of the opening is circular, a cylindrical breathable material may be inserted into the opening.

Fig. 5 depicts the manner in which this moisture-adsorbent material is mounted inside a semi-sealed container, wherein the opening 8 of the moisture-adsorbent unit faces the opening 7 of the semi-sealed container 6, and the moisture-adsorbent unit is secured so as to cover the opening 7 of the semi-sealed container 6. By disposing the moisture-adsorbent unit in this manner, contaminants entering the interior of the semi-sealed container 6 through the opening 7 can be collected in the moisture-adsorbent unit filter (breathable sheet 3). Also, contaminants entering the interior of the moisture-adsorbent unit can also be adsorbed by employing a moisture-adsorbent unit that has a moisture-adsorbent material mixture containing activated carbon or the like.

Also, as depicted in Fig. 6, the moisture-adsorbent unit may assume an embodiment in which a sheeted adhesive/bonding agent 5 is affixed to part of the sheeted or pelleted moisture-adsorbent material 4, a surface other than the adhesive/bonding agent-fixed surface is covered with breathable material 3, and an opening 8 is mounted in the sheeted adhesive/bonding agent. When this moisture-adsorbent unit is mounted in the semi-sealed container, the opening of the moisture-adsorbent unit may face the opening of the semi-sealed container, and the moisture-adsorbent unit may be secured so as to cover the opening of the semi-sealed container in the same manner as depicted in Fig. 5.

The material of the semi-sealed container used in the present invention is not particularly limited, and the following materials may be appropriately used: aluminum, stainless steel, and other metals; polyolefin resin, ABS resin, fluoride resin, and other plastics; and other materials. For example, in the housing (container) of an HDD, a die-cast aluminum case and stainless steel cover are usually screwed together and sealed via a gasket.

The moisture-adsorbent unit of the present invention is suitable for use mainly inside a magnetic storage disk device (the hard disk drive device depicted in Fig. 7, for example), but can also be applied to an organic EL element or other electronic instrument, a camera or other optical instrument, a precision instrument, a shipping or storage case for an electronic component, or any other semi-sealed container that requires internal condensation prevention.

### Examples

The present invention will be described in detail hereafter based on practical examples. However, the following practical examples in no way limit the present invention, and any and all modified implementations are encompassed in the technical scope of the present invention within the boundaries heretofore and hereafter described. Also, "RH" refers to relative humidity.

### Experiment 1

### Manufacturing of moisture-adsorbent material sheets

### Moisture-adsorbent material sheet No. 1

20 Parts by mass of the molding auxiliary naphtha (manufactured by Wako Pure Chemical) were added to 80 parts by mass of a mixture (mass ratio of 6:4) of pulverulent silica gel (V₃₋₁₀: 0.61 mL/g) and PTFE fine powder ("6J," manufactured by Mitsui-DuPont Fluorochemical), and the product was paste extruded. The extrudate thus obtained was rolled to a thickness of 1 mm, the molding auxiliary was dried off at 150°C, and moisture-adsorbent material sheet No. 1 was obtained.

The hereinafter described measurements were performed for this moisture-adsorbent material sheet No. 1. Results thereof are shown in Table 1.

### <Sheet density (sheet density before adsorption)>

After moisture-adsorbent material sheet No. 1 was dried at 120°C for 2 hours, the product was cut to a size of 50 X 50 mm, the thickness thereof was measured with a dial gauge, and the mass was calculated with an electronic scale.

### <Moisture-adsorbent material density (density of moisture-adsorbent material before adsorption)>

The moisture-adsorbent material density (density without PTFE component) of moisture-adsorbent material sheet No. 1 was calculated from the abovementioned sheet density and moisture-adsorbent material/PTFE compounding ratio.

### <Moisture adsorption/difference in moisture adsorption>

After moisture-adsorbent material sheet No. 1 was dried at 120°C for 2 hours, the product was allowed to stand for 4 hours in a thermo-humidistat set to 25°C, 85% RH and 25°C, 95% RH" and the moisture adsorption was found by measuring the difference in moisture adsorption with an electronic scale before and after the product was allowed to stand in the tank. The moisture adsorption was displayed as a percentage by mass of the mass of the moisture-adsorbent material before adsorption, as found from the abovementioned moisture-adsorbent material density. Also, the value for the difference in moisture adsorption was found by subtracting the moisture adsorption at 25°C and 85% RH from the moisture adsorption at 25°C and 95% RH.

### Moisture-adsorbent material sheet No. 2

Moisture-adsorbent material sheet No. 2 was obtained in the same manner as moisture-adsorbent material sheet No. 1, using a mixture (mass ratio of 6:4) of pulverulent silica gel (V₃₋₁₀: 0.23 mL/g) and PTFE fine powder ("6J," manufactured by Mitsui-DuPont Fluorochemical). The sheet density, moisture-adsorbent material density, and moisture adsorption were found for moisture-adsorbent material sheet No. 2 in the same manner as with moisture-adsorbent material sheet No. 1. Results thereof are shown in Table 1.

### Moisture-adsorbent material sheet No. 3

Moisture-adsorbent material sheet No. 3 was obtained in the same manner as moisture-adsorbent material sheet No. 1, using a mixture (mass ratio of 6:4) of type B silica gel (V₃₋₁₀ : 0.13 mL/g) and PTFE fine powder. The sheet density, moisture-adsorbent material density, and moisture adsorption were found for moisture-adsorbent material sheet No. 3 in the same manner as with moisture-adsorbent material sheet No. 1. Results thereof are shown in Table 1.

**Table 1**

| Moisture-adsorbent material sheet No. | Sheet density (g/mL) | Moisture-adsorbent material density (g/mL) | Moisture adsorption (% by mass) | | Difference in moisture adsorption (% by mass) |
|---|---|---|---|---|---|
| | | | 85% RH | 95% RH | |
| 1 | 0.70 | 0.42 | 38 | 105 | 67 |
| 2 | 0.83 | 0.50 | 62 | 79 | 17 |
| 3 | 0.87 | 0.52 | 66 | 72 | 6 |

### Manufacturing of moisture-adsorbent units

The abovementioned moisture-adsorbent material sheets Nos. 1 through 3 were stamped to 50 X 50 mm, each was affixed to the center of one side of 15 X 15 mm polyester-backed double-sided adhesive tape ("DCX903," manufactured by Sumitomo 3M), and 15X15 mm porous PTFE film ("S2-050201," manufactured by Japan Gore-Tex) was furthermore laminated thereon to cover the moisture-adsorbent material sheet. The double-sided adhesive tape and the porous PTFE film were bonded and secured to the outer peripheral edge thereof, and moisture-adsorbent units Nos. 1 through 3 were obtained with a structure (the cross-sectional view of Fig. 3) in which the moisture-adsorbent material sheet was completely covered by the double-sided adhesive tape and porous PTFE film.

The hereinafter described evaluation was performed using a semi-sealed container for the abovementioned moisture-adsorbent units No. 1 through No. 3 to confirm the moisture absorbing characteristics thereof.

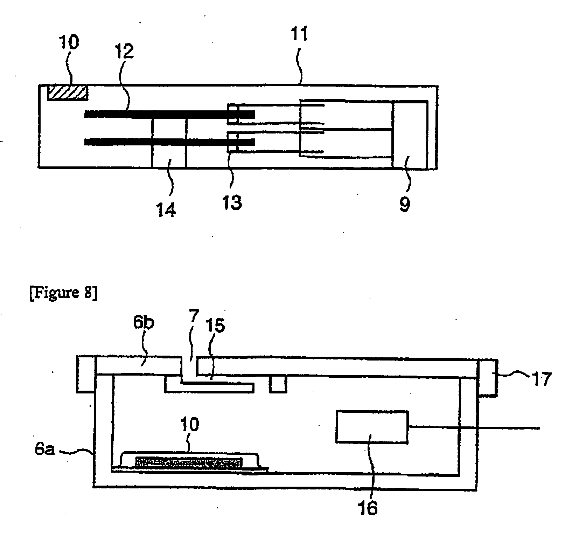

A lidded stainless steel container with a capacity of 50 X 40 X 10 mm (20mL) was prepared, and a temperature/humidity sensor (HPR-MQ, manufactured by Shinyei Kaisha) and moisture-adsorbent unit were mounted inside the container. An air vent with a radius of 0.5 mm was opened in part of the container, and a duct (cross-sectional area: 0.25 mm², length: 10 mm) for adjusting the quantity of moisture flowing into the container was provided in the breathing hole. The lid and the container main body were sealed with aluminum tape to eliminate leakage of the air inside the container. The insertion hole for the temperature/humidity sensor was sealed with epoxy-type bonding agent to eliminate leakage of the air inside the container. Fig. 8 shows a cross-sectional view of the semi-sealed container used in this evaluation.

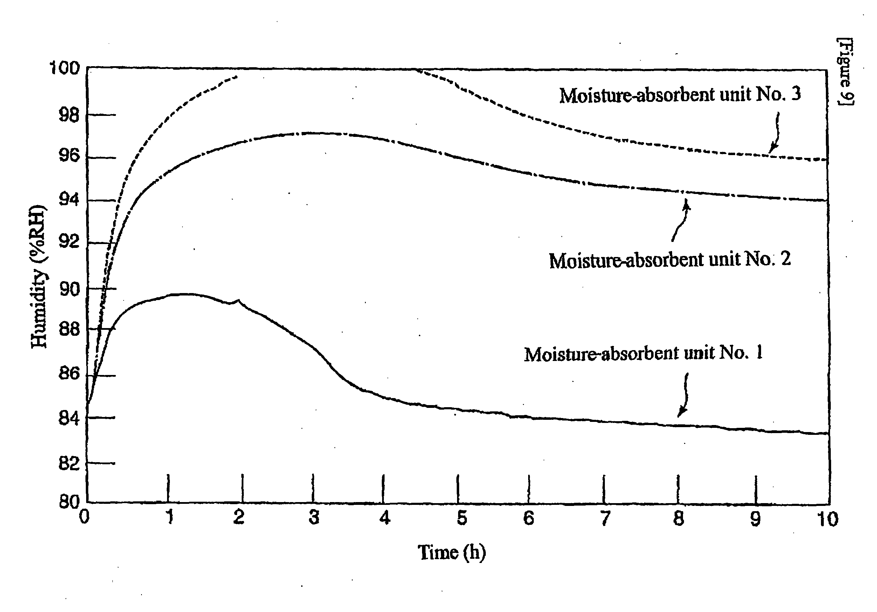

The abovementioned semi-sealed container was mounted in a thermo-humidistat adjusted to 60°C and 85% RH, and was left there until the interior of the semi-sealed container reached 60°C and 85% RH. The thermo-humidistat was then changed from 60°C and 85% RH to 25°C and 40% RH over the course of 3 hours, and the humidity change inside the semi-sealed container was measured. Results thereof are shown in Fig. 9.

Fig. 9 is a graph in which the time after initial measurement is plotted on the horizontal axis, and the relative humidity inside the semi-sealed container is plotted on the vertical axis. It is apparent from the graph that relative humidity increases to 15% or higher and reaches 100% during a sharp temperature change in a semi-sealed container obtained using moisture-adsorbent material sheet No. 3, which has only a moisture-adsorbent material and does not satisfy the requirements of the present invention. In contrast, the increase in relative humidity corresponding to environmental changes is restricted to approximately 5% and 12% for moisture-adsorbent units No. 1 and No. 2, respectively. These units were obtained using moisture-adsorbent material that satisfies the requirements of the present invention, and the presence of adequate condensation preventing effects therein was confirmed.

### Experiment 2

### Manufacturing of moisture-adsorbent unit No. 4

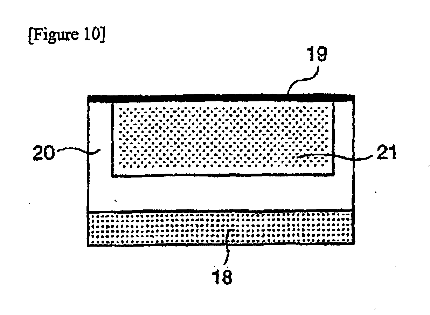

The moisture-adsorbent unit depicted in Fig. 10 was manufactured. 6 mg of pulverulent activated carbon (V₃₋₁₀: 0.72 mL/g) and 24 mg of type B silica gel (V₃₋₁₀ : 0.13 mL/g) were placed in a container obtained by injection molding of polycarbonate ("CF5101V," manufactured by Sumitomo Dow), and porous PTFE film and a laminated product ("SMD-02020," manufactured by Japan Gore-Tex) of olefinic nonwoven cloth ("S0303WDO," manufactured by Unitika) were fusion-fixed to form a lid on the container. Double-sided adhesive tape was next affixed to the bottom surface of the container, and moisture-adsorbent unit No. 4 was obtained.

### Manufacturing of moisture-adsorbent unit No. 5

Moisture-adsorbent unit No. 5 was manufactured in the same manner as moisture-adsorbent unit No. 4, using 30 mg of the same type B silica gel as that used in moisture-adsorbent unit No. 4.

### Evaluation of moisture-adsorbent units

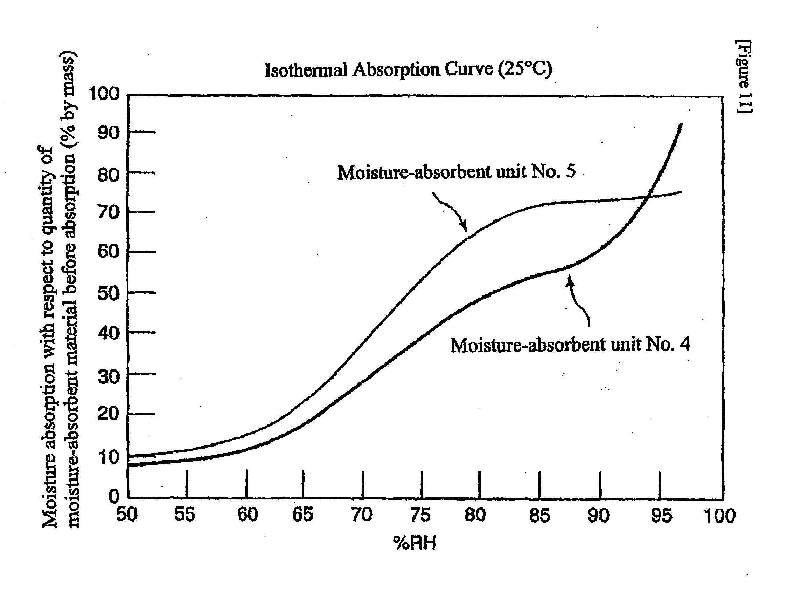

Moisture-adsorbent units No. 4 and No. 5 were allowed to stand in a thermo-humidistat ("SH220," manufactured by Tabai Espec Corp.) maintained at a specific relative humidity (temperature of 25°C), and the moisture adsorption was measured with an electronic scale. Results thereof are shown in Fig. 11.

Fig. 11 is a graph showing the relative humidity inside the semi-sealed container on the horizontal axis, and the moisture adsorption with respect to the quantity of moisture-adsorbent material before adsorption on the vertical axis. Although the moisture adsorption increases at 60 to 80% RH in the moisture-adsorbent unit No. 5, in which the requirements of the present invention are not satisfied, the moisture adsorption does not increase much for higher ranges of humidity. In contrast, an increase in moisture adsorption is apparent at a humidity range of 60 to 80%, as well as a high humidity range of 90% or higher, in the moisture-adsorbent unit No. 5, in which the requirements of the present invention are satisfied, and adequate moisture absorbing characteristics are also apparent for further humidification in a high-humidity environment.

### Effects of the Invention

The moisture-adsorbent unit of the present invention has a moisture-adsorbent material with specific characteristics and configuration, and is capable, though miniature and having a limited quantity of moisture-adsorbent material, of restricting condensation inside a semi-sealed container whose interior is at a comparatively high humidity, when the semi-sealed container undergoes a sharp temperature drop from being placed in a low-temperature environment. Thus, the moisture-adsorbent unit of the present invention is also suitable for a miniature HDD or other semi-sealed container in which extra space is extremely limited.

## Claims

1. A magnetic storage disk drive comprising: a moisture-adsorbent unit being located inside said disk drive, said moisture-adsorbent unit comprising a porous moisture-adsorbent material for which the cumulative pore volume of pores with radii of 3 to 10 nm is at least 0.2 mL/g and for which the difference in moisture adsorption, obtained by subtracting the moisture adsorption at a temperature of 25°C and relative humidity of 85% from the moisture adsorption at a temperature of 25°C and relative humidity of 95%, is 15% by mass or more of the moisture-adsorbent material before adsorption.

2. The magnetic storage disk drive according to claim 1, said moisture-adsorbent further comprising a moisture-adsorbent material and/or gas-adsorbent material other than said porous moisture-adsorbent material.

3. The magnetic storage disk drive according to claim 1, wherein the moisture-adsorbent unit has one or more air vents.

4. The magnetic storage disk drive according to claim 1, wherein the porous moisture-adsorbent material comprises at least one type selected from among a group comprising silica gel, alumina gel, silica/alumina gel, and activated carbon.

5. The magnetic storage disk drive according to claim 1, wherein the porous moisture-adsorbent material or the moisture-adsorbent material mixture is in a sheet form or pellet form further comprising a binder.

6. The magnetic storage disk drive according to claim 5, wherein the binder comprises polytetrafluoroethylene.

7. The magnetic storage disk drive according to claim 5, wherein the binder comprises a moisture-adsorbent polymer.

8. The magnetic storage disk drive according to claim 1, wherein the porous moisture-adsorbent material or the moisture-adsorbent material mixture is contained in a receptacle, at least a part of which is formed from an air-permeable sheet.

9. The magnetic storage disk drive according to claim 8, wherein the air-permeable sheet comprises porous polytetrafluoroethylene film.

10. The magnetic storage disk drive according to claim 8, wherein the receptacle has one or more openings facing the air vents.

11. The magnetic storage disk drive according to claim 1, wherein the magnetic storage disk drive comprises a hard disk drive device.

12. The magnetic storage disk drive as in claim 2, wherein said moisture adsorbent material other than said porous moisture adsorbent material is also a gas-adsorbent material.

## Patentansprüche

1. Magnetspeicherplattenlaufwerk, das aufweist: eine innerhalb des Plattenlaufwerks angeordnete Feuchtigkeitsadsorptionsmitteleinheit, wobei die Feuchtigkeitsadsorptionsmitteleinheit ein poröses feuchtigkeitsadsorbierendes Material aufweist, dessen kumulatives Porenvolumen von Poren mit Radien von 3 bis 10 nm mindestens 0,2 ml/g beträgt und für das die Differenz in der Feuchtigkeitsadsorption, die man durch Subtrahieren der Feuchtigkeitsadsorption bei einer Temperatur von 25°C und einer relativen Feuchte von 85% von der Feuchtigkeitsadsorption bei einer Temperatur von 25°C und einer relativen Feuchte von 95% erhält, mindestens 15 Masse-% des Feuchtigkeitsadsorptionsmittels vor der Adsorption beträgt.

2. Magttetspeicherplattenlaufwerk nach Anspruch 1, wobei das Feuchtigkeitsadsorptionsmittel ferner ein anderes feuchtigkeitsadsorbierendes Material und/oder gasadsorbierendes Material als das poröse feuchtigkeifsadsorbierende Material aufweist.

3. Magnetspeicherplattenlaufwerk nach Anspruch 1, wobei die feuchtigkeitsadsorbierende Einheit eine oder mehrere Entlüftungsöffnungen aufweist.

4. Magnetspeicherplattenlaufwerk nach Anspruch 1, wobei das poröse feuchtigkeitsadsorbierende Material mindestens einen Typ aufweist, der aus einer Gruppe ausgewählt ist, die aus Kieselgel, Tonerdegel, Kieselgel/Tonerdegel und Aktivkohle besteht.

5. Magnetspeicherplattenlaufwerk nach Anspruch 1, wobei das poröse feuchtigkeitsadsorbierende Material oder das feuchtigkeitsadsorbierende Materialgemisch in Folienform oder Pelletform vorliegt und ferner ein Bindemittel aufweist.

6. Magnetspeicherplattenlaufwerk nach Anspruch 5, wobei das Bindemittel Polytetrafluorethylen aufweist.

7. Magnetspeicherplattenlaufwerk nach Anspruch 5, wobei das Bindemittel ein feuchtigkeitsadsorbierendes Polymer aufweist.

8. Magnetspeicherplattenlaufwerk nach Anspruch 1, wobei das poröse feuchtigkeitsadsorbierende Material oder das feuchtigkeitsadsorbierende Materialgemisch in einem Behälter enthalten ist, von dem mindestens ein Teil aus einer luftdurchlässigen Folie besteht.

9. Magnetspeicherplattenlaufwerk nach Anspruch 8, wobei die luftdurchlässige Folie poröse Polytetrafluorethylenfolie aufweist.

10. Magnetspeicherplattenlaufwerk nach Anspruch 8, wobei der Behälter eine oder mehrere Öffnungen aufweist, die Entlüftungsöffnungen gegenüberliegen.

11. Magnetspeicherplatrenlaufwerk nach Anspruch 1, wobei das Magnetspeicherplattenlaufwerk ein Festplattenlaufwerk aufweist.

12. Magnetspeicherplattenlaufwerk nach Anspruch 2, wobei das andere feuchtigkeitsadsorbierende Material als das poröse feuchtigkeitsadsorbierende Material auch ein gasadsorbierendes Material ist.

## Revendications

1. Lecteur de disque à stockage magnétique comprenant: une unité adsorbante d'humidité qui est localisée à l'intérieur dudit lecteur de disque, ladite unité adsorbante d'humidité comprenant un matériau adsorbant d'humidité poreux pour lequel le volume de pore cumulé de pores avec des rayons de 3 à 10 nm est au moins de 0,2 ml/g et pour lequel la différence dans l'adsorption d'humidité, obtenue en soustrayant l'adsorption d'humidité à une température de 25°C et une humidité relative de 85% à l'adsorption d'humidité à une température de 25°C et une humidité relative de 95%, est de 15% en masse ou plus du matériau adsorbant d'humidité avant l'adsorption.

2. Lecteur de disque à stockage magnétique suivant la revendication 1, ledit adsorbant d'humidité comprenant en outre un matériau adsorbant d'humidité et/ou un matériau adsorbant de gaz autre que ledit matériau adsorbant d'humidité poreux.

3. Lecteur de disque à stockage magnétique suivant la revendication 1, dans lequel l'unité adsorbante d'humidité possède un ou plusieurs évents d'air.

4. Lecteur de disque à stockage magnétique suivant la revendication 1, dans lequel le matériau adsorbant d'humidité poreux comprend au moins un type choisi parmi un groupe comprenant un gel de silice, un gel d'alumine, un gel de silice/aluniine et un charbon actif.

5. Lecteur de disque à stockage magnétique suivant la revendication 1, dans lequel le matériau adsorbant d'humidité poreux ou le mélange de matériaux adsorbants d'humidité est sous une forme de feuille ou une forme de pastille, comprenant en outre un liant.

6. Lecteur de disque à stockage magnétique suivant la revendication 5, dans lequel le liant comprend un polytétrafluoroéthylène.

7. Lecteur de disque à stockage magnétique suivant la revendication 5, dans lequel le liant comprend un polymère adsorbant d'humidité.

8. Lecteur de disque à stockage magnétique suivant la revendication 1, dans lequel le matériau adsorbant d'humidité poreux ou le mélange de matériaux adsorbants d'humidité est contenu dans un réceptacle, dont au moins une partie est formée d'une feuille perméable à l'air.

9. Lecteur de disque à stockage magnétique suivant la revendication 8, dans lequel la feuille perméable à l'air comprend un film de polytétrafluoroéthylène poreux.

10. Lecteur de disque à stockage magnétique suivant la revendication 8, dans lequel le réceptacle possède une ou deux ouvertures faisant face aux évents d'air.

11. Lecteur de disque à stockage magnétique suivant la revendication 1, où le lecteur de disque à stockage magnétique comprend un dispositif de lecteur de disque dur.

12. Lecteur de disque à stockage magnétique suivant la revendication 2, dans lequel ledit matériau adsorbant d'humidité autre que ledit matériau adsorbant d'humidité poreux est également un matériau adsorbant de gaz.
